# EUROPÄISCHE PATENTSCHRIFT

(11) **EP 1 334 296 B1**
(45) Veröffentlichungstag und Bekanntmachung des Hinweises auf die Patenterteilung: **11.05.2005**
(21) Anmeldenummer: 01953998.0
(22) Anmeldetag: 02.07.2001
(51) Int. Cl.: F16H 57/02, H02K 7/08

(54) **ANTRIEBSVORRICHTUNG**
DRIVE DEVICE
DISPOSITIF D'ENTRAINEMENT

(30) Priorität: 03.07.2000 DE 10031335
(43) Veröffentlichungstag der Anmeldung: 13.08.2003
(73) Patentinhaber: Valeo Motoren und Aktuatoren GmbH, 74321 Bietigheim-Bissingen (DE)
(72) Erfinder: FREY, Ronald, 74357 Bönnigheim (DE); KAISER, Friedrich, 74321 Bietigheim-Bissingen (DE); HELMICH, Johannes, 97877 Wertheim (DE); KLAR, Josef, 74369 Löschgau (DE); BAESKOW, Werner, 74394 Hessigheim (DE)
(74) Vertreter: Jahn, Wolf-Diethart
(86) Internationale Anmeldenummer: PCT/EP2001/007555
(87) Internationale Veröffentlichungsnummer: WO 2002/002968

(56) Entgegenhaltungen:
- EP-A- 0 412 238
- EP-A- 0 521 645
- US-A- 4 452 541
- US-A- 5 212 999

## Beschreibung

Die Erfindung betrifft eine Antriebsvorrichtung mit einem elektrischen Antriebsmotor, mit einem Gehäuse mit vorzugsweise einem Gehäusedeckel, mit wenigstens einer von dem Antriebsmotor angetriebenen Welle und mit Ausgleichsmitteln zum Ausgleichen des Axialspiels der Welle, wobei die Ausgleichsmittel wenigstens ein axial elastisch verformbares Elastomerelement mit wenigstens einer Anlauffläche beinhalten. Die Erfindung betrifft außerdem ein derartiges Elastomerelement.

Unter der vom Antriebsmotor angetriebenen Welle wird im Nachfolgenden eine von dem Antriebsmotor über ein Getriebe, insbesondere über ein Schneckengetriebe, angetriebene Abtriebswelle als auch eine unmittelbar von dem Antriebsmotor angetriebene Ankerwelle verstanden.

Derartige Antriebsvorrichtungen finden insbesondere im Kraftfahrzeugbau als Stellmotoren für Sitzverstellungen, Lenksäulenverstellungen, Fensterheber, Schiebedächer oder dergleichen sowie als Antriebsvorrichtungen für Scheibenwischanlagen Verwendung. Die Antriebsvorrichtungen weisen in der Regel ein dem Antriebsmotor nachgeschaltetes Schneckengetriebe auf, das vorteilhafterweise geringe Abmessungen aufweist, große Kräfte übertragen kann und selbsthemmend ist.

Insbesondere aufgrund der schrägen Flanken der Schneckenwellen und des Schneckenrades eines derartigen Schneckengetriebes wirkt während des Betriebes der Antriebsvorrichtung eine Axialkraft auf die Ankerwelle des Antriebsmotors als auch auf die Abtriebswelle des Schneckengetriebes. Die Richtung der Axialkraft ist dabei abhängig von der Drehrichtung der Ankerwelle. Bei Drehrichtungswechsel des Antriebsmotors oder äußerem Lastwechsel dreht sich die Richtung der Axialkraft an der Ankerwelle als auch an der Abtriebswelle um, weil das Schneckenrad in umgekehrter Kraftrichtung beansprucht wird. Aufgrund von Fertigungstoleranzen der Einzelteile der Antriebsvorrichtung und aufgrund eines betriebsbedingten Verschleißes im Bereich der Axiallagerung der Welle kann es zu einem relativ großen unerwünschten Axialspiel der verschiedenen Wellen kommen. Durch ein derartiges Axialspiel kommt es bei einer Richtungsumkehr des Antriebsmotors zu ruckartigen Anfahrbewegungen sowie zu störenden Geräuschen. Außerdem wird hierdurch ein positionsgenaues Anfahren bzw. Rückfahren von bspw. einer zu öffnenden Scheibe oder eines Schiebedaches erschwert.

Des Weiteren kann es zu spürbaren Relativbewegungen kommen, wenn die Antriebsvorrichtung z. B. als Stellmotor für eine Sitzlehnenverstellung eingesetzt wird und der Fahrer auch bei stehendem Motor das Axialspiel als Relativbewegung der Sitzlehne wahrnimmt. Des Weiteren ist dieses Phänomen bei Lenkradverstellungen bekannt.

Aus der gattungsbildenden DE 38 15 356 A1 ist eine eingangs beschriebene Antriebsvorrichtung bekannt geworden, welche als Ausgleichsmittel zum Ausgleichen des Axialspiels einer Welle einen an dem freien Ende der Welle angeordneten Anlaufpilz aufweist, der gegen die Anlauffläche einer Hartmetallplatte eines gummierten Hartmetallteils läuft, wobei die Gummischicht zwischen der Hartmetallplatte und dem Gehäuse der Antriebsvorrichtung angeordnet ist. Eine derartige Vorrichtung weist den Nachteil auf, dass zum einen sowohl der Anlaufpilz als auch die Hartmetallplatte aus gehärtetem Material sein muss, um die extrem hohen, punktuell auf die Platte bzw. die Anlauffläche wirkenden Druckkräfte ohne eine Beschädigung des Anlaufpilzes oder der Hartmetallplatte aufnehmen zu können. Weiterhin weist eine derartige Vorrichtung aufgrund des Gewichts des Hartmetalls ein nicht zu vernachlässigendes relativ hohes Gesamtgewicht auf.

Der vorliegenden Erfindung liegt deshalb die Aufgabe zugrunde, den vorstehend genannten Nachteilen des Standes der Technik abzuhelfen.

Diese Aufgabe wird bei einer eingangs beschriebenen Antriebsvorrichtung erfindungsgemäß dadurch gelöst, dass die wenigstens eine Anlauffläche eine PTFE-, PET-Beschichtung aufweist.

Entscheidender Vorteil einer erfindungsgemäßen Antriebsvorrichtung ist, dass die Ausgleichsmittel ohne Verwendung einer Hartmetallplatte auskommen. Dabei wird die Anlauffläche des Elastomerelements unmittelbar mit einer entsprechenden, insbesondere einer PTFE-Beschichtung, beschichtet. Gerade aufgrund einer derartigen Beschichtung der Anlauffläche wird die Reibung zwischen der beschichteten Anlauffläche und sich gegenüber der Anlauffläche rotierenden Gegenelement minimiert. Dadurch, dass keine extra Hartmetallplatte benötigt wird, wird außerdem eine Bauteilreduzierung erreicht, was eine erhebliche Fertigungskostenreduzierung zur Folge hat. Weiterhin wird das Gewicht der gesamten Antriebsvorrichtung reduziert. Die Beschichtung kann dabei bspw. durch Aufvulkanisieren auf das Elastomerelement aufgebracht werden.

Eine Weiterbildung der Erfindung sieht vor, dass das Elastomerelement mit der der beschichteten Anlauffläche abgewandten Seite ortsfest an dem Gehäuse oder dem Gehäusedeckel angeordnet ist. Vorteilhafterweise kann dadurch das Elastomerelement in der Vormontage an vorzugweise den Gehäusedeckel montiert werden, wodurch eine Vereinfachung der Endmontage erreicht werden kann.

Andererseits ist auch denkbar, dass das Elastomerelement mit der der beschichteten Anlauffläche abgewandten Seite ortsfest an der Welle angeordnet ist. Hierbei kann das Elastomerelement in der Vormontage mit der Welle verbunden werden, wodurch ebenfalls die Endmontage vereinfacht wird.

Alternativ dazu kann es von Vorteil sein, dass das Elastomerelement schwimmend gelagert zwischen der Welle und dem Gehäuse bzw. dem Gehäusedeckel angeordnet ist. Dadurch werden in dem Elastomerelement aufgrund der schwimmenden Lagerung Eigenspannungen abgebaut, die einen Ausgleich des Axialspiels der Welle negativ beeinflussen können.

Erfindungsgemäß kann die beschichtete Anlauffläche eine ebene Oberfläche oder, alternativ dazu, eine gewölbte oder pilzförmig ausgebildete Oberfläche aufweisen. Eine ebene Oberfläche bietet sich dann an, wenn die mit der Anlauffläche korrespondierende Gegenfläche nicht eben ist, andererseits bietet sich eine gewölbte oder pilzförmig ausgebildete Oberfläche der Anlauffläche dann an, wenn bspw. die Gegenfläche eine ebene Fläche ist.

Bei einer besonders vorteilhaften Ausgestaltung der Erfindung ist nicht nur die Anlauffläche des Elastomerelements als ebene Oberfläche ausgebildet, sondern auch die Anlauffläche des korrespondierenden Gegenelements weist eine ebene Gegenfläche auf. Dadurch wird vorteilhafterweise erreicht, dass die beschichtete Anlauffläche nicht punktuell, sondern flächig belastet wird. Aufgrund der flächigen Belastung der Beschichtung des Elastomerelements werden Spannungsspitzen, die bei einer punktuellen Belastung auftreten, vermieden. Dadurch wird die Oberfläche der beschichteten Anlauffläche weniger stark beansprucht, wodurch die Lebensdauer der Ausgleichsmittel zum Ausgleichen des Axialspiels der Welle wesentlich erhöht wird.

Vorteilhafterweise kann erfindungsgemäß vorgesehen sein, dass das Elastomerelement eine Elastomerscheibe ist. Eine derartige Elastomerscheibe kann zwei zueinander parallel angeordnete beschichtete Anlaufflächen aufweisen, wobei vorzugweise die eine Anlauffläche gegen das Gehäuse oder den Gehäusedeckel und die andere Anlauffläche vorzugsweise gegen die Welle läuft. Eine derartige Elastomerscheibe ist insbesondere dafür vorgesehen, dass sie schwimmend gelagert wird. Aufgrund der beidseitig vorhandenen Beschichtung kann die Elastomerscheibe einerseits Relativbewegungen zu der Welle, als auch andererseits Relativbewegungen zu dem Gehäuse bzw. dem Gehäusedeckel ausführen. Damit werden in der Elastomerscheibe möglicherweise auftretende Scherspannungen minimiert und das Reibungsverhalten verbessert.

Erfindungsgemäß ist auch denkbar, dass das Elastomerelement eine Elastomerringscheibe ist, wobei die Elastomerringscheibe vorteilhafterweise zwei zueinander parallel angeordnete beschichtete Anlaufflächen aufweist, wobei vorzugweise die eine Anlauffläche gegen einen an dem Gehäuse oder dem Gehäusedeckel vorhandenen Gehäuseringbund und die andere Anlauffläche vorzugweise gegen einen an der Welle angeordneten Wellenringbund läuft. Eine derartige Ausgestaltung der Erfindung hat insbesondere den Vorteil, dass der Axialspielausgleich nicht an den freien Enden der Welle erfolgen muss, sondern an beliebiger Stelle der Welle erfolgen kann. Die Anordnung von Ausgleichsmitteln zum Ausgleichen des Axialspiels an den Wellenenden kann insbesondere aus Platzgründen problematisch sein. Der Wellenringbund kann dabei bspw. von einem auf der Welle angeordneten Flansch, einem Ritzel, einem Zahnrad oder dergleichen gebildet werden.

Ein weiterer, entscheidender Vorteil der Verwendung von Elastomerscheiben bzw. Elastomerringscheiben ist, dass zwei oder mehr Elastomerscheiben bzw. Elastomerringscheiben axial parallel nebeneinander angeordnet werden können. Dies hat insbesondere den Vorteil, dass auch größere Axialspiele für bspw. verschiedene Arten von Antriebsvorrichtungen durch Nebeneinanderanordnen von ein und denselben Elastomerscheiben bzw. Elastomerringscheiben ausgeglichen werden können. Eine derartige Elastomerscheibe bzw. Elastomerringscheibe kann folglich universell in verschiedenen Antriebsvorrichtung mit verschieden großen auszugleichenden Axialspielen Verwendung finden. Dabei können die Elastomerscheiben bzw. Elastomerringscheiben vorteilhafterweise beidseitig beschichtet sein, wodurch eine gegenseitige Relativbewegung sowie eine Relativbewegung zu der Welle oder zu dem Gehäuse bzw. Gehäusedeckel aufgrund der geringen Reibung optimal erfolgen kann. Andererseits ist auch denkbar, dass die Elastomerscheiben lediglich eine beschichtete Anlauffläche aufweisen, wobei dann die jeweils beschichteten Anlaufflächen einander zugewandt oder, je nach Ausführungsform, auch voneinander abgewandt angeordnet werden können.

Eine derartige Elastomerscheibe oder Elastomerringscheibe weist bspw. eine Stärke von 2 mm auf, wobei die Teflonbeschichtung dann ca. 0,3 - 0,5 mm betragen kann.

Erfindungsgemäß kann auch vorgesehen sein, dass die Anlaufflächen Vertiefungen oder Schlitzungen aufweisen. Solche Vertiefungen oder Schlitzungen können insbesondere zur Aufnahme von unerwünschten Partikeln dienen, die zwischen die Anlauffläche und die mit der Anlauffläche korrespondierenden Gegenfläche gelangen. Dadurch wird ein Beschädigen der beschichteten Anlauffläche durch derartige Partikel vermieden. Wie eingangs bereits erwähnt, kann die Welle eine von dem Antriebsmotor über ein Getriebe, insbesondere über eine Schnecke angetriebene Antriebswelle sein. Andererseits ist auch denkbar, dass die Welle eine von dem Antriebsmotor angetriebene Ankerwelle ist.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Fig. 1: eine erfindungsgemäße Antriebsvorrichtung in Längsschnitt,
- Fig. 2 und 3: zwei weitere Ausführungsformen der Erfindung anhand von Teillängsschnitten erfindungsgemäßer Antriebsvorrichtungen,
- Fig. 4: ein Teillängsschnitt einer weiteren erfindungsgemäßen Antriebsvorrichtung,
- Fig. 5 bis 8: Ausschnitte aus der Antriebsvorrichtung gemäß Fig. 4 mit verschiedenen Elastomerringscheiben.

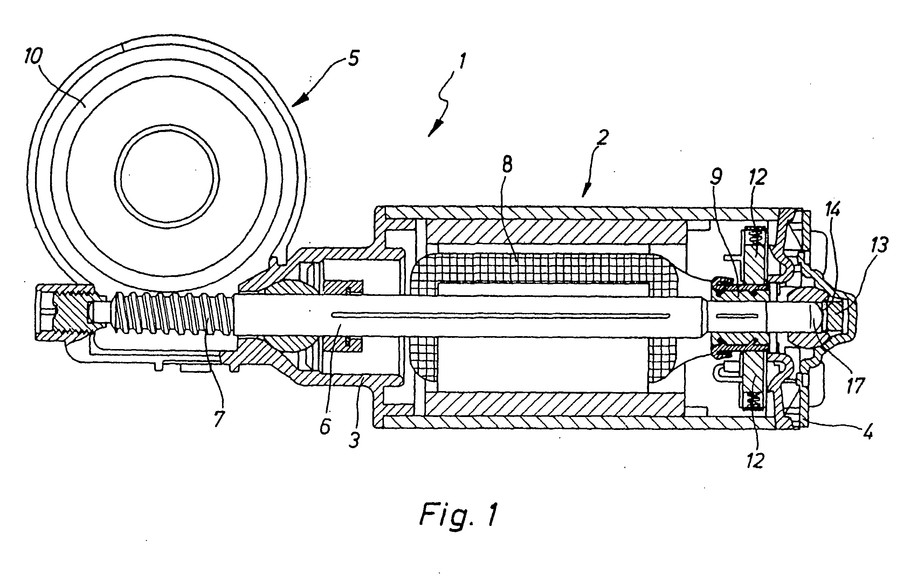

In der Fig. 1 ist eine Antriebsvorrichtung 1 mit einem elektrischen Antriebsmotor 2, mit einem Gehäuse 3, welches einen Gehäusedeckel 4 aufweist, und mit einem Schneckengetriebe 5 dargestellt. Der Antriebsmotor 2 weist dabei eine Ankerwelle 6 auf, bei welcher auf der dem Schneckengetriebe 5 zugewandten Seite eine Schnecke 7 aufgebracht ist. Die Schnecke 7 treibt dabei ein Schneckenrad 10 des Schneckengetriebes 5 an. Weiterhin weist die Ankerwelle 6 einen Anker 8 sowie einen Stromwender 9 auf. Der Elektromotor 2 sieht außerdem zwei Bürsten 12 vor, deren freie Enden unter Federspannung auf dem Stromwender 9 gleitet.

Zum Ausgleich eines möglichen Axialspiels der Ankerwelle 6 ist in dem topfförmig ausgebildeten Gehäusedeckel 4 ein Elastomerelement 13 angeordnet, dessen der Ankerwelle 6 zugewandte Seite eine PTFE-Beschichtung 14 aufweist. Die der Ankerwelle 6 zugewandte Oberfläche der PTFE-Beschichtung dient dabei als Anlauffläche für das dem Elastomerelement 13 zugewandte Ende 17 der Ankerwelle 6. Das mit der Anlauffläche 14 korrespondierende Wellenende 17 ist, wie aus der Fig. 1 deutlich zu erkennen ist, gewölbt ausgeführt. Vorteilhafterweise ist die der Beschichtung 14 abgewandte Seite des Elastomerelements 13 ortsfest an der Innenseite des Gehäusedeckels 4 angeordnet, so dass das Elastomerelement 13 mit dem Gehäusedeckel 4 vormontiert werden kann. Bei Verschrauben des Gehäusedeckels 4 mit dem Gehäuse 3 des Antriebsmotors 2 wird das Elastomerelement 13 axial zusammengedrückt, wodurch eine das Axialspiel ausgleichende Axialkraft auf die Ankerwelle 6 wirkt. Aufgrund der PTFE-Beschichtung 14 des Elastomerelements 13 wird die Reibung zwischen dem Wellenende 17 und der Anlauffläche 14 minimiert. Die Anlauffläche 14 weist eine ebene Oberfläche auf. Dadurch, dass das Wellenende 17 gewölbt ausgebildet ist, wird die PTFE-Beschichtung 14 nicht punktförmig, sondern kreisflächenförmig belastet, wodurch Spannungsspitzen innerhalb der Beschichtung 14 vermieden werden.

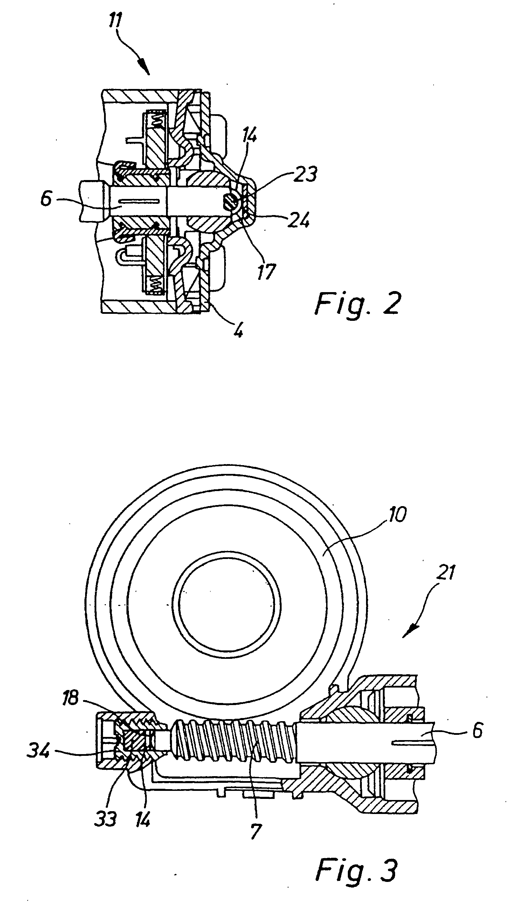

Die in der Fig. 2 dargestellte Antriebsvorrichtung 11 entspricht im Wesentlichen der Ausgestaltung gemäß Fig. 1. Unterschied hierzu ist die Art des Axialspielausgleichs. Wie aus Fig. 2 deutlich wird, weist das Ende der Welle 17 ein Elastomerelement 23 mit einer PTFE-Beschichtung 14 auf. Dabei ist das Elastomerelement 23 mit der der beschichteten Anlauffläche 14 abgewandten Seite ortsfest an der Welle 6 angeordnet. Die beschichtete Anlauffläche 23 ist in dieser Ausführungsform nicht eben, sondern gewölbt ausgebildet. Allerdings weist das mit der Anlauffläche 14 korrespondierende Gegenelement 24 eine ebene Gegenfläche auf. Bei Montage des Gehäusedeckels 14 wird das Elastomerelement 23 axial zusammengedrückt, wodurch eine das Axialspiel ausgleichende Axialkraft erzeugt wird.

Fig. 3 zeigt eine weitere erfindungsgemäße Antriebsvorrichtung 21, bei der die Mittel zum Ausgleich des Axialspiels an dem anderen Ende der Ankerwelle 6 vorhanden sind. An dem dargestellten Ende 18 der Ankerwelle 6 ist die Ankerwelle 6 gewölbt ausgebildet. Das Wellenende 18 läuft dabei gegen eine PTFE-Beschichtung 14 eines Elastomerelements 33. Das Elastomerelement 33 ist hierbei in einer ein Außengewinde aufweisenden Stellschraube 34 angeordnet, die zur Feineinstellung des Axialspiels der Ankerwelle 6 vorgesehen ist. Durch Zustellen der Stellschraube 34 kann reguliert werden, wie stark das Elastomerelement 33 in axialer Richtung zusammengedrückt werden soll und wie hoch die daraus resultierende Axialkraft zum Ausgleich des Axialspiels sein soll. Anstelle des gewölbten Wellenendes 18 ist auch denkbar, dass das Wellenende als flache, ebene Oberfläche ausgestaltet ist. Dadurch werden insbesondere auf die Beschichtung 14 wirkende Spannungen reduziert.

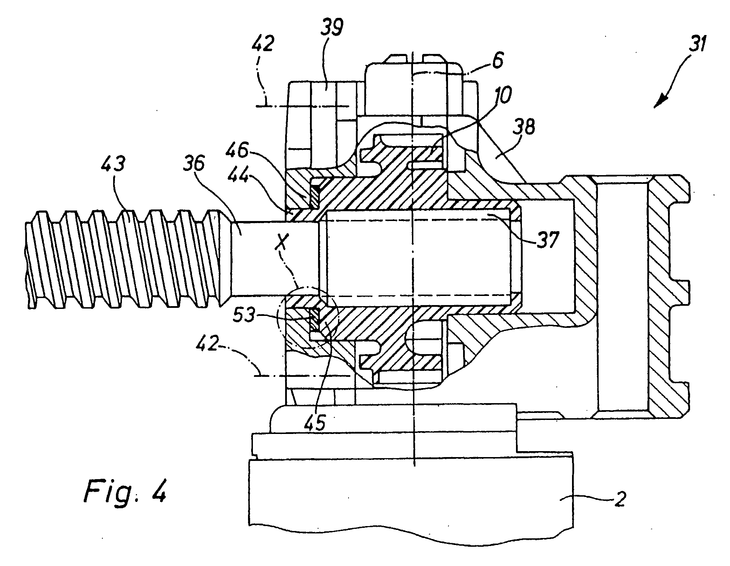

In der in Fig. 4 dargestellten Antriebsvorrichtung 31 soll nun nicht, wie gemäß den Fign. 1 bis 3, das Axialspiel einer Ankerwelle 6 ausgeglichen werden, sondern das Axialspiel einer Abtriebswelle 36 eines Schneckengetriebes. Fig. 4 zeigt den Antriebsmotor 2, wobei die nicht zu sehende Ankerwelle mit der Schnecke entlang der Achse 6 verläuft. Deutlich zu erkennen ist das auf der Welle 36 angeordnete Schneckenrad 10. Das Schneckenrad 10 ist dabei als Kunststoffteil an die Abtriebswelle 36 angeformt, die in diesem Bereich eine Geradverzahnung 37 zur formschlüssigen Verbindung des Schneckenrades 10 mit der Abtriebswelle 36 aufweist.

Das Schneckengetriebe ist von einem Getriebegehäuse 38 umgeben, welches einen Gehäusedeckel 39 aufweist, der mit schematisch angedeuteten Befestigungsschrauben 42 mit dem Getriebegehäuse 38 verschraubt ist. An den dem Schneckenrad 10 abgewandten Bereich der Abtriebswelle 36 ist ein Trapezgewinde 43 vorhanden, auf dem ein nicht dargestellter Kulissenstein angeordnet werden kann, der über eine Mechanik das mit der Antriebsvorrichtung betätigbare Bauteil antreibt. Die in der Fig. 4 dargestellte Antriebsvorrichtung ist insbesondere zum Antrieb einer Sitzverstellung eines Sitzes für Kraftfahrzeuge geeignet.

Auf der Abtriebswelle 36 bzw. auf einem Absatz 44 des das Schneckenrad 10 tragenden Bauteils ist ein Elastomerringscheibe 53 angeordnet.

Das das Schneckenrad 10 aufweisende Bauteil weist einen ringartigen Vorsprung 45 auf, gegen den eine Elastomerringscheibe 53 läuft. Weiterhin weist der Gehäusedeckel 39 auf der der Elastomerringscheibe 53 zugewandten Seite einen Ringbund 46 auf, zwischen dem und dem Vorsprung 45 die Elastomerringscheibe 53 angeordnet ist. Bei Verschrauben des Gehäusedeckels 39 wird damit die Elastomerringscheibe 53 in axialer Richtung zusammengedrückt, wodurch die Abtriebswelle 36 mit einer das Axialspiel ausgleichenden Axialkraft beaufschlagt wird.

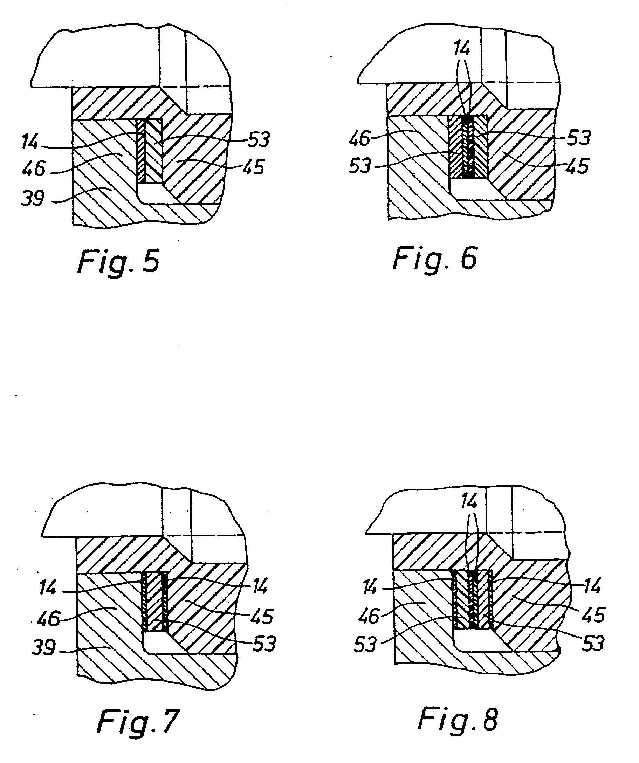

Die Fign. 5 - 8 zeigen verschiedene Ausführungen der Elastomerringscheibe 53, wobei der Ausschnitt gemäß X der Fig. 4 wiedergegeben ist.

Nach Fig. 5 kann die Elastomerringscheibe 53 lediglich eine PTFE-beschichtete Anlauffläche 14 aufweisen.

Wie in Fig. 6 dargestellt, ist auch denkbar, zwei Elastomerringscheiben 53 zu verwenden, welche jeweils eine PTFE-beschichtete Anlauffläche 14 aufweisen. Dabei können die Elastomerringscheiben 53 derart verbaut werden, dass die die PTFE-Beschichtung aufweisenden Seiten 14 der beiden Elastomerringscheiben 53 einander zugewandt sind.

Fig. 7 zeigt eine Ausführungsform der Erfindung, bei der die Elastomerringscheibe 53 zwei zueinander parallel angeordnete, mit PTFE beschichtete Anlaufflächen 14 aufweist, wobei die eine Anlauffläche 14 gegen den Gehäusedeckel 39 und die andere Anlauffläche 14 gegen den Vorsprung 45 läuft.

Fig. 8 zeigt eine weitere Ausgestaltung, bei welcher zwei beidseitig beschichtete Elastomerringscheiben 53 axial nebeneinander angeordnet sind. Damit wird ein optimales Gleitverhalten mit gleichzeitigem Axialspielausgleich erreicht.

Je nach auszugleichendem Axialspiel ist es denkbar, weitere Elastomerringscheiben axial nebeneinander anzuordnen. Die Elastomerringscheiben 53 gemäß Fig. 7 und 8 sind schwimmend gelagert, wodurch Scherspannungen innerhalb der Elastomerringscheiben 53 weitgehend unterbleiben.

Die Elastomerringscheiben 53 gemäß Fig. 5 bzw. 6 sind ebenfalls schwimmend gelagert, wobei aufgrund der PTFE-Beschichtung die Relativbewegung weitgehend zwischen den beiden PTFE-Beschichtungen bzw. zwischen der PTFE-Beschichtung 14 und dem Ringbund 46 des Gehäusedeckels 39 erfolgen wird.

Vorteilhafterweise können die in den Fign. 1 - 8 dargestellten Anlaufflächen Vertiefungen oder Schlitzungen aufweisen, die zur Aufnahme von den Anlaufflächen möglicherweise verschmutzenden Partikeln dienen.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Antriebsvorrichtung (1, 11, 21, 31) mit einem elektrischen Antriebsmotor (2), mit einem Gehäuse (3, 38) mit vorzugsweise einem Gehäusedeckel (4, 39), mit wenigstens einer von dem Antriebsmotor (2) angetriebenen Welle (6, 36) und mit Ausgleichsmitteln zum Ausgleichen des Axialspiels der Welle (6, 36), wobei die Ausgleichmittel wenigstens ein axial elastisch verformbares Elastomerelement (13, 23, 33, 53) mit wenigstens einer Anlauffläche beinhalten, **dadurch gekennzeichnet, dass** die wenigstens eine Anlauffläche eine PTFE, PET Beschichtung (14) aufweist.

2. Antriebsvorrichtung (11) nach Anspruch 1, **dadurch gekennzeichnet, dass** das Elastomerelement (13, 33) mit der der beschichteten Anlauffläche (14) abgewandten Seite ortsfest an dem Gehäuse (3) oder dem Gehäusedeckel (4) angeordnet ist.

3. Antriebsvorrichtung (21) nach Anspruch 1, **dadurch gekennzeichnet, dass** das Elastomerelement (23) mit der der beschichteten Anlauffläche (14) abgewandten Seite ortsfest an der Welle angeordnet (6) ist.

4. Antriebsvorrichtung (31) nach Anspruch 1, **dadurch gekennzeichnet, dass** das Elastomerelement (53) schwimmend gelagert zwischen der Welle (36) und dem Gehäuse (38) bzw. dem Gehäusedeckel (39) angeordnet ist.

5. Antriebsvorrichtung (1, 21, 31) nach einem der vorhergehenden Ansprüche, **dadurch gekennzeichnet, dass** die beschichtete Anlauffläche (14) eine ebene Oberfläche aufweist.

6. Antriebsvorrichtung (11) nach einem der Ansprüche 1 bis 4, **dadurch gekennzeichnet, dass** die beschichtete Anlauffläche (14) eine nicht ebene, vorzugsweise gewölbte oder pilzförmig ausgebildete Oberfläche aufweist.

7. Antriebsvorrichtung (21, 31) nach einem der vorhergehenden Ansprüche, **dadurch gekennzeichnet, dass** das mit der Anlauffläche (14) korrespondierende Gegenelement (24, 45, 46) eine ebene Gegenfläche aufweist.

8. Antriebsvorrichtung (1) nach einem der vorhergehenden Ansprüche, **dadurch gekennzeichnet, dass** das Elastomerelement eine Elastomerscheibe (13) ist.

9. Antriebsvorrichtung (1) nach Anspruch 8, **dadurch gekennzeichnet, dass** die Elastomerscheibe zwei zueinander parallel angeordnete beschichtete Anlaufflächen aufweist, wobei vorzugsweise die eine Anlauffläche gegen das Gehäuse oder den Gehäusedeckel und die andere Anlauffläche vorzugsweise gegen die Welle läuft.

10. Antriebsvorrichtung (31) nach einem der Ansprüche 1 bis 7, **dadurch gekennzeichnet, dass** das Elastomerelement eine auf der Welle anordenbare Elastomerringscheibe (53) ist.

11. Antriebsvorrichtung (31) nach Anspruch 10, **dadurch gekennzeichnet, dass** die Elastomerringscheibe (53) zwei zueinander parallel angeordnete beschichtete Anlaufflächen (14) aufweist, wobei vorzugsweise die eine Anlauffläche gegen einen an dem Gehäuse (38) oder dem Gehäusedeckel (39) vorhandenen Gehäuseringbund (46) und die andere Anlauffläche (14) vorzugsweise gegen einen an der Welle (36) angeordneten Wellenringbund (45) läuft.

12. Antriebsvorrichtung (31) nach Anspruch 11, **dadurch gekennzeichnet, dass** der Wellenringbund (45) von einem auf der Welle (36) angeordneten Flansch, einem Ritzel, Zahnrad (10), Vorsprung odgl. gebildet wird.

13. Antriebsvorrichtung (31) nach einem der Ansprüche 8 bis 12, **dadurch gekennzeichnet, dass** zwei oder mehr Elastomerscheiben bzw. Elastomerringscheiben (53) axial parallel nebeneinander angeordnet sind.

14. Antriebsvorrichtung (1, 11, 21, 31) nach einem der vorhergehenden Ansprüche, **dadurch gekennzeichnet, dass** die Anlaufflächen (14) Vertiefungen oder Schlitzungen aufweisen.

15. Antriebsvorrichtung (31) nach einem der vorhergehenden Ansprüche, **dadurch gekennzeichnet, dass** die Welle (36) eine von dem Antriebsmotor (2) über ein Getriebe (5), insbesondere über eine Schnecke (7) angetriebene Abtriebswelle ist.

16. Antriebsvorrichtung (1, 11, 21) nach einem der vorhergehenden Ansprüche, **dadurch gekennzeichnet, dass** die Welle (6) eine von dem Antriebsmotor (2) angetriebene Ankerwelle ist.

## Claims

1. Drive device (1, 11, 21, 31) comprising an electric drive motor (2), a housing (3, 38) with preferably a housing cover (4, 39), at least one shaft (6, 36) driven by the drive motor (2), and compensating means for compensating the axial play of the shaft (6, 36), wherein the compensating means comprise at least one axially elastically deformable elastomer element (13, 23, 33, 53) with at least one contact surface, **characterized in that** the at least one contact surface has a PTFE or PET coating (14).

2. Drive device (11) according to Claim 1, **characterized in that** the elastomer element (13, 33) is arranged with the side remote from the coated contact surface (14) in a fixed position on the housing (3) or the housing cover (4).

3. Drive device (21) according to Claim 1, **characterized in that** the elastomer element (23) is arranged with the side remote from the coated contact surface (14) in a fixed position on the shaft (6).

4. Drive device (31) according to Claim 1, **characterized in that** the elastomer element (53) is arranged such that it is mounted in a floating manner between the shaft (36) and the housing (38) or the housing cover (39).

5. Drive device (1, 21, 31) according to one of the preceding claims, **characterized in that** the coated contact surface (14) has a flat surface.

6. Drive device (11) according to one of Claims 1 to 4, **characterized in that** the coated contact surface (14) has a surface which is not flat, preferably a curved or mushroom-shaped surface.

7. Drive device (21, 31) according to one of the preceding claims, **characterized in that** the counter-element (24, 45, 46) which corresponds to the contact surface (14) has a flat counter-surface.

8. Drive device (1) according to one of the preceding claims, **characterized in that** the elastomer element is an elastomer disc (13).

9. Drive device (1) according to Claim 8, **characterized in that** the elastomer disc has two coated contact surfaces arranged parallel to one another, wherein preferably one contact surface runs against the housing or the housing cover and the other contact surface runs preferably against the shaft.

10. Drive device (31) according to one of Claims 1 to 7, **characterized in that** the elastomer element is an elastomer annular disc (53) which can be arranged on the shaft.

11. Drive device (31) according to Claim 10, **characterized in that** the elastomer annular disc (53) has two coated contact surfaces (14) which are arranged parallel to one another, wherein preferably one contact surface runs against a housing annular collar (46) on the housing (38) or the housing cover (39) and the other contact surface (14) preferably runs against a shaft annular collar (45) arranged on the shaft (36).

12. Drive device (31) according to Claim 11, **characterized in that** the shaft annular collar (45) is formed by a flange arranged on the shaft (36), a pinion, toothed wheel (10), protrusion or the like.

13. Drive device (31) according to one of Claims 8 to 12, **characterized in that** two or more elastomer discs or elastomer annular discs (53) are arranged axially parallel next to one another.

14. Drive device (1, 11, 21, 31) according to one of the preceding claims, **characterized in that** the contact surfaces (14) have depressions or slits.

15. Drive device (31) according to one of the preceding claims, **characterized in that** the shaft (36) is a driven shaft which is driven by the drive motor (2) via a gear mechanism (5), in particular via a worm (7).

16. Drive device (1, 11, 21) according to one of the preceding claims, **characterized in that** the shaft (6) is an armature shaft which is driven by the drive motor (2).

## Revendications

1. Dispositif d'entraînement (1, 11, 21, 31) comportant un moteur d'entraînement électrique (2), un boîtier (3, 38) doté avantageusement d'un couvercle de boîtier (4, 39), au moins un arbre (6, 36) entraîné par le moteur d'entraînement (2) et des moyens de compensation pour compenser le jeu axial de l'arbre (6, 36), les moyens de compensation comportant au moins un élément élastomère (13, 23, 33, 53) déformable élastiquement dans la direction axiale et présentant au moins une surface portante, **caractérisé en ce que** l'au moins une surface portante présente un revêtement de PTFE ou PET (14).

2. Dispositif d'entraînement (11) selon la revendication 1, **caractérisé en ce que** l'élément élastomère (13, 33) est disposé fixe sur le boîtier (3) ou le couvercle de boîtier (4) avec le côté opposé à la surface portante revêtue (14).

3. Dispositif d'entraînement (21) selon la revendication 1, **caractérisé en ce que** l'élément élastomère (23) est disposé fixe sur l'arbre avec le côté opposé à la surface portante revêtue (14).

4. Dispositif d'entraînement (31) selon la revendications 1, **caractérisé en ce que** l'élément élastomère (53) est monté de façon flottante entre l'arbre (36) et le boîtier (36) respectivement le couvercle de boîtier (39).

5. Dispositif d'entraînement (1, 21, 31) selon l'une des revendications précédentes, **caractérisé en ce que** la surface portante revêtue (14) est une surface plane.

6. Dispositif d'entraînement (11) selon l'une des revendications 1 à 4, **caractérisé en ce que** la surface portante revêtue (14) est une surface plane, avantageusement incurvée ou fongiforme.

7. Dispositif d'entraînement (21, 31) selon l'une des revendications précédentes, **caractérisé en ce que** l'élément homologue (24, 45, 46) correspondant à la surface portante (14) est une surface homologue plane.

8. Dispositif d'entraînement (1) selon l'une des revendications précédentes, **caractérisé en ce que** l'élément élastomère est un disque élastomère (13).

9. Dispositif d'entraînement (1) selon la revendication 8, **caractérisé en ce que** le disque élastomère comporte deux surfaces portantes revêtues et disposées parallèlement l'une à l'autre, l'une des surfaces portantes portant avantageusement contre le boîtier ou le couvercle de boîtier et l'autre surface portante portant avantageusement contre l'arbre.

10. Dispositif d'entraînement (31) selon l'une des revendications 1 à 7, **caractérisée en ce que** l'élément élastomère est un disque annulaire élastomère (53) pouvant être disposé sur l'arbre.

11. Dispositif d'entraînement (31) selon la revendication 10, **caractérisé en ce que** le disque annulaire élastomère (53) comporte deux surfaces portantes revêtues (14) disposées parallèlement l'une à l'autre, l'une des surfaces portantes portant avantageusement contre un rebord annulaire de boîtier (46) présent au niveau du boîtier (38) ou du couvercle de boîtier (39) et l'autre surface portante (14) portant avantageusement contre un rebord annulaire d'arbre (45) disposé sur l'arbre (36).

12. Dispositif d'entraînement (31) selon la revendication 11, **caractérisé en ce que** le rebord annulaire d'arbre (45) est formé par un rebord, un pignon, une roue dentée (10), une saillie ou analogue disposé sur l'arbre (36).

13. Dispositif d'entraînement (31) selon l'une des revendications 8 à 12, **caractérisé en ce que** deux disques élastomères respectivement disques annulaires élastomères (53) ou plus sont disposés axialement et parallèlement l'un à l'autre.

14. Dispositif d'entraînement (1, 11, 21, 31) selon l'une des revendications précédentes, **caractérisé en ce que** les surfaces portantes (14) comportent des évidements ou des fentes.

15. Dispositif d'entraînement (31) selon l'une des revendications précédentes, **caractérisé en ce que** l'arbre (36) est un arbre de sortie entraîné par le moteur d'entraînement (2) par l'intermédiaire d'un engrenage (5), en particulier par une vis sans fin (7).

16. Dispositif d'entraînement (1, 11, 21) selon l'une des revendications précédentes, **caractérisé en ce que** l'arbre (6) est un arbre d'induit entraîné par le moteur d'entraînement (2).
